Europäisches Patentamt

European Patent Office

Office européen des brevets

(11) Veröffentlichungsnummer: **0 347 661**
**A2**

## (12) EUROPÄISCHE PATENTANMELDUNG

(21) Anmeldenummer: 89110430.9

(22) Anmeldetag: 09.06.89

(51) Int. Cl.⁴: **C09D 5/08**

(30) Priorität: 18.06.88 DE 3820664

(43) Veröffentlichungstag der Anmeldung:
27.12.89 Patentblatt 89/52

(84) Benannte Vertragsstaaten:
**AT BE CH DE ES FR GB GR IT LI LU NL SE**

(71) Anmelder: **Schmalbach-Lubeca AG**
**Schmalbachstrasse 1**
**D-3300 Braunschweig(DE)**

(72) Erfinder: **Vohrer, Klaus-Peter**
**Gänseweide 3**
**D-3175 Leiferde(DE)**

(74) Vertreter: **Döring, Rudolf, Dr.-Ing.**
**Patentanwälte Dr.-Ing. R. Döring Dipl.-Phys.**
**Dr. J. Fricke Jasperallee 1a**
**D-3300 Braunschweig(DE)**

(54) **Dünnflüssiger Korrosionsschutzlack.**

(57) Korrosionsschutzlacke, die im Ink-Jet-Verfahren Verwendung finden sollen, müssen bestimmten technischen Anforderungen genügen, insbesondere hinsichtlich ihrer Viskosität und Oberflächenspannung. Ein vorgeschlagener, dünnflüssiger Korrosionsschutzlack enthält Acetal des Polyvinylalkohols, Epoxidharz auf der Basis von Epichlorhydrin und Diphenylolpropan, nichtplastifiziertes, methylverestertes Melaminformaldehydharz, ein Gemisch von Alkoholen und aromatenhaltiges Kohlenwasserstoffgemisch.

EP 0 347 661 A2

## Dünnflüssiger Korrosionsschutzlack

Die Erfindung betrifft einen dünnflüssigen Korrosionsschutzlack.

Verpackungsbehälter aus Metallteilen, beispielsweise Getränkedosen, und Verpackungsbehälterteile, beispielsweise Verschlußdeckel oder dgl., werden häufig durch eine Rundumlackierung mit einer Korrosionsschutzschicht versehen, ehe die Behälter bzw. Behälterteile einer weiteren Bearbeitung unterworfen werden.

Diese Bearbeitung, beispielsweise das Verformen oder das Einbringen von Ritzlinien, von Schweißnähten, das Anbringen von Ausstanzungen, sonstige Schneid-oder Stanzbearbeitungen, wird deshalb erst nach der Lackierung der Behälter oder Behälterteile vorgenommen, weil eine Lackierung mit Spritzdüsen wegen der komplizierten Geometrie nach der Verformung oftmals sehr schwierig und daher sehr aufwendig ist.

Damit aber treten korrosionsgefährdete Stellen auf, wenn beispielsweise die Aufreißlaschen von Getränkedosen nachträglich durch die Korrosionsschutzschicht in die Metallflächen eingebracht werden. Diese Schnittkanten können auch nicht durch etwa zuvor auf dem Behälter aufgebrachte Beschichtungen abgedeckt werden.

Zur Lösung dieses Problems ist in der EP-A1 240 651 vorgeschlagen worden, die entstehenden korrosionsgefährdeten Bereiche nach der Ink-Jet-Methode durch programmgesteuertes, punktförmiges Aufbringen des Korrosionsschutzmittels zur Bildung eines filmartigen Auftrages zu beschichten.

Bei dem Ink-Jet-Verfahren treten neuartige, technische Anforderungen an den Korrosionsschutzlack auf, die sich von denen herkömmlicher Spritz- oder Walzlacke unterscheiden. So muß beispielsweise die Viskosität so eingestellt werden, daß der Korrosionsschutzlack mit Hilfe von Dispenserdüsen aufgetragen werden kann.

Ein Verdünnen mit bekannten Lösungsmitteln für Spritzlacke (Methyläthylketonen, Methylglycol, Äthylglycolacetat oder Xylol) oder Walzlacke (Solventnaphtha II, Isopropylglycol oder Isophoron) ergibt unbefriedigende Werte bei der Verwendung im Ink-Jet-Verfahren.

Im Ink-Jet-Verfahren bei anderen Anwendungszwecken eingesetzte Additive können hier beim Korrosionsschutzlack nicht verwendet werden, da sie z.B. an der zu schützenden Oberfläche verbleiben würden und etwa beim Aufreißen der Lasche und anschließendem Ausgießen des Inhalts der Verpackung mit in das Füllgut gelangen könnten.

Bei Stahldeckeln kommt als Korrosionsschutzlack bisher Glycerinmonooleat zum Einsatz, das zusammen mit Isopropanol verarbeitet wird. Es handelt sich mithin um ein in Lösungsmittel gelöstes Fettmaterial. Nachteilig ist die Tendenz dieses Stoffes, Staubpartikel anzuziehen und so einen Streifen mit Ablagerungen staubförmiger Konsistenz zu bilden. Dieses ist aus optischen und hygienischen Gründen unerwünscht. Darüber hinaus bildet es relativ breite Streifen, wird nicht oder schlecht hart.

Aus der DE 25 03 557 C2 ist eine sprühbare Mischung für Schutzüberzüge auf Metalloberflächen bekannt, die vor allem als Schutzüberzug auf Kraftfahrzeugkarosserien Verwendung finden soll. Sie enthält Anteile von Vinylharz, Weichmacher für das Vinylharz, bituminöse Substanzen, Thixotropiemittel und Füllmittel, ggf. auch Hilfsharze zur Verbesserung der mechanischen Eigenschaften des Schutzüberzuges. Eine derartige sprühbare Mischung ist jedoch nicht im Ink-Jet-Verfahren einsetzbar; sie besitzt allerdings Antikorrosions-und Antiabriebeigenschaften.

Aufgabe der vorliegenden Erfindung ist es daher, einen dünnflüssigen Korrosionsschutzlack vorzuschlagen, der zur Verarbeitung mit Hilfe von Dispenserdüsen im Ink-Jet-Verfahren geeigneter ist.

Diese Aufgabe wird gelöst durch einen dünnflüssigen Korrosionsschutzlack, der enthält:

a) 2,8 bis 12,5 Gew.% Acetal des Polyvinylalkohols mit einem Anteil von etwa 18 Gew.% Vinylalkohol mit einem Molekulargewicht von über 10.000,

b) 1 bis 3 Gew.% Epoxidharz 70%ig auf der Basis von Epichlorhydrin und Diphenylolpropan,

c) 0,9 bis 2,9 Gew.% eines nichtplastifizierten methylveresterten Melaminformaldehydharzes 50%ig,

d) 55 bis 85 Gew.% eines Gemisches von niederen Alkoholen von $C_1$ - $C_6$,

e)8 bis 15 Gew.% eines aromatenhaltigen Kohlenwasserstoffgemisches mit einem Siedebereich von 160 bis 185° und einem Aromatengehalt von etwa 99%.

Während die Bestandteile a), b) und c) das Bindemittel darstellen, wirken die Bestandteile d) und e) als Lösungsmittel.

Da der Lösungsmittelanteil rasch verdunstet, kann das Korrosionsschutzmaterial beim Ausgießen nicht in das Füllgut des Verpackungsbehälters gelangen. Das erfindungsgemäße Korrosionsschutzmaterial hat eine definierte Viskosität und Oberflächenspannung. Es wird möglich, mit einem Minimum an Tropfen, die mit Hilfe der Dispenserdüsen im Ink-Jet-Verfahren auf den zu besprühenden Behälter, insbesondere auf eine Ritzlinie, abgegeben werden, eine maximale Strecke der Beschichtung zu erreichen.

Dadurch kann mit möglichst wenig Ink-Jet-Düsen und damit kostensparend eine vollständige Abdeckung der Ritzlinie gewährleistet werden.

Als besonders vorteilhaft hat es sich erwiesen, wenn als Alkohol Isobutanol (35 bis 45 Gew.%) und Diacetonalkohol (20 bis 40 Gew.%) verwendet werden.

Als aromatenhaltiges Kohlenwasserstoffgemisch wird Solventnaphtha I (auch Solventnaphtha leicht genannt) vorgeschlagen.

Dem Korrosionsschutzlack können auch zusätzlich Pigmente, Farbstoffe und/oder optische Aufheller beigegeben werden. Diese können in Anlehnung an die übrige Lackierung der Verpackung gewählt werden.

Durch zusätzliche Zugabe von im UV-Licht reflektierenden Bestandteilen ist vorteilhaft eine Produktkontrolle möglich.

Wird als Katalysator Phosphorsäure oder ein Phosphorsäurederivat hinzugefügt, so kann auf eine Wärmebehandlung des aufgebrachten Korrosionsschutzlackes verzichtet werden, wenn genügend lange Aushärtzeiten zur Verfügung stehen. Durch die Phosphorsäure erfolgt eine Vernetzung bei gleichzeitiger Wärmeentwicklung. Sollten kürzere Aushärtezeiten gewünscht sein, so kann zusätzlich eine Wärmebehandlung erfolgen. Anstelle der Phosphorsäure könnte als Katalysator auch Salzsäure eingesetzt werden. Die Verwendung von Salzsäure bei Nahrungs- und Genußmitteln ist jedoch sehr kritisch, so daß der Einsatz von Phosphorsäure bevorzugt wird.

Wärmebehandlungszeiten von 2 Minuten bei 180°C haben sich im übrigen als ausreichend erwiesen. Je nach Zusammensetzung treten aber auch Schwankungen von 1 bis 5 Minuten bei 150 bis 250°C auf.

Die Viskosität des Korrosionsschutzlackes lag zwischen 13,5 und 16,0 $mm^2/s$, vorzugsweise um 14,5 $mm^2/s$ (1 $mm^2/s$ = 1 c St) bei einem Festkörpergehalt von 4 bis 16%, vorzugsweise um 7%.

Die Oberflächenspannung lag zwischen 26 und 30 dyn/m, um 28 dyn/m.

Bei der Herstellung des erfindungsgemäßen Korrosionsschutzlackes hat sich ein Verfahren als besonders geeignet herausgestellt, das aus folgenden Schritten besteht:

a) Alkohol, vorzugsweise Diacetonalkohol, wird in einen Mischbehälter gegeben,

b) Acetal des Polyvinylalkohols wird unter Rühren langsam dazugegeben,

c) Alkohol, vorzugsweise Isobutanol, und aromatische Kohlenwasserstoffe, vorzugsweise Solventnaphtha I, werden miteinander gemischt und die Mischung unter Rühren in den Mischbehälter gegeben,

d) Epoxidharz wird unter Rühren dazugegeben,

e) Melaminformaldehydharz wird unter Rühren dazugegeben.

Sofern als Katalysator Phosphorsäure oder ein Phosphorsäurederivat Verwendung finden soll, wird dieser bevorzugt am Schluß zugegeben, um vorzeitige Katalysatorwirkung zu vermeiden.

In Schritt b) sollte Klumpenbildung vermieden werden. Die Zugabe sollte langsam erfolgen und eine Erwärmung auf 40 bis 60°C, vorzugsweise 50°C, erfolgen. Anschließend sollte eine Abkühlung auf Raumtemperatur vorgenommen und etwaiger Verdunstungsverlust durch Zugabe von Alkohol, vorzugsweise Isobutanol, ausgeglichen werden.

Nach Durchführen aller Schritte sollte die Lösung klar sein.

**Ansprüche**

1. Dünnflüssiger Korrosionsschutzlack, enthaltend:

a) 2,8 bis 12,5 Gew.% Acetal des Polyvinylalkohols mit einem Anteil von etwa 18 Gew.% Vinylalkohol mit einem Molekulargewicht von über 10.000,

b) 1 bis 3 Gew.% Epoxidharz 70%ig auf der Basis von Epichlorhydrin und Diphenylolpropan,

c) 0,9 bis 2,9 Gew.% eines nichtplastifizierten methylveresterten Melaminformaldehydharzes 50%ig,

d) 55 bis 85 Gew.% eines Gemisches von niederen Alkoholen von $C_1$ - $C_6$,

e) 8 bis 15 Gew.% eines aromatenhaltigen Kohlenwasserstoffgemisches mit einem Siedebereich von 160 bis 185° und einem Aromatengehalt von etwa 99%.

2. Korrosionsschutzlack nach Anspruch 1, **dadurch gekennzeichnet,** daß das Gemisch von Alkoholen 35 bis 45 Gew.% Isobutanol enthält.

3. Korrosionsschutzlack nach Anspruch 1 oder 2, **dadurch gekennzeichnet,** daß das Gemisch von Alkoholen 20 bis 40 Gew.% Diacetonalkohol enthält.

4. Korrosionsschutzlack nach einem der vorstehenden Ansprüche, **dadurch gekennzeichnet,** daß das aromatenhaltige Kohlenwasserstoffgemisch überwiegend aus Solventnaphtha I besteht.

5. Korrosionsschutzlack nach einem der vorstehenden Ansprüche, **dadurch gekennzeichnet,** daß zusätzlich Pigmente, Farbstoffe, optische Aufheller und/oder im UV-Licht reflektierende Bestandteile enthalten sind.

6. Korrosionsschutzlack nach einem der vorstehenden Ansprüche, **dadurch gekennzeichnet,** daß zusätzlich 3 bis 5 Gew.% Phosphorsäure oder Phosphorsäurederivate enthalten sind.

7. Verfahren zur Herstellung des Korrosionsschutzlackes nach einem der vorstehenden Ansprüche mit folgenden Schritten:

a) Alkohol, vorzugsweise Diacetonalkohol, wird in einen Mischbehälter gegeben,

b) Acetal des Polyvinylalkohols wird unter Rühren langsam dazugegeben,

c) Alkohol, vorzugsweise Isobutanol, und aromatische Kohlenwasserstoffe, vorzugsweise solventnaphtha I, werden miteinander gemischt und die Mischung unter Rühren in den Mischbehälter gegeben,

d) Epoxidharz wird unter Rühren dazugegeben,

e) Melaminformaldehydharz wird unter Rühren dazugegeben.

8. Verfahren nach Anspruch 7, **dadurch gekennzeichnet**, daß im Anschluß an die Schritte a bis e Phosphorsäure oder Phosphorsäurederivate dazugegeben werden.